Europäisches Patentamt

European Patent Office

Office européen des brevets

(11) Publication number: **0 230 564**

**A1**

# EUROPEAN PATENT APPLICATION

(21) Application number: **86116697.3**

(22) Date of filing: **02.12.86**

(51) Int. Cl.³: **C 08 L 21/00**
**C 08 K 3/22, C 08 K 3/26**
**C 08 K 3/38**

(30) Priority: **02.12.85 JP 272241/85**

(43) Date of publication of application:
**05.08.87 Bulletin 87/32**

(84) Designated Contracting States:
**DE FR IT**

(71) Applicant: **Bando Chemical Industries, Ltd.**
**15-go, 2-ban, 3-chome Meiwa-dori**
**Hyogo-ku Kobe Hyogo(JP)**

(72) Inventor: **Shioyama, Tsutomu**
**8-43, 2-chome Kasugadai Nishi-ku**
**Kobe Hyogo(JP)**

(72) Inventor: **Yamada, Daigi**
**2-6-105, Tominoue**
**Akashi Hyogo(JP)**

(74) Representative: **Gauger, Hans-Peter, Dipl.-Ing. et al,**
**Patentanwälte Dipl.-Ing.Hans-Jürgen Müller**
**Dipl.-Chem.Dr.Gerhard Schupfner Dipl.-Ing.Hans-Peter**
**Gauger Lucile-Grahn-Strasse 38**
**D-8000 München 80(DE)**

(54) Rubber Flooring.

(57) The rubber flooring according to the present invention is used for vehicles and floors of buildings. It is compounded with at least 40 weight parts of aluminium hydroxide, at least 10 weight parts (as metal quantity) of at least one selected from among calcium carbonate, magnesium carbonate, magnesium oxide, calcium hydroxide and magnesium hydroxide and at least 3 weight parts of at least one selected from among zinc borate, antimony trioxide and antimony pentoxide, to 100 weight parts of rubber. It has both flame-resistance and low fuming property.

EP 0 230 564 A1

TITLE OF THE INVENTION

Rubber flooring

BACKGROUND OF THE INVENTION

Field of the invention:

This invention relates to a flame-resistant rubber flooring (floor covering material) which is less fuming at its burning or smoldering.

Description of the prior art:

For floors of vehicles and building, rubber flooring is generally used because of its abrasion-resistance, resistance to chemicals, resistance to thermal deformation (for example, it is not scratched when one grinds a cigarette butt under one's foot on the flooring), hand feeling, etc. One of the characteristics required for the rubber flooring is a less fuming property at burning or smoldering, as well as flame-resistance.

For the purpose of improving the flame-resistance, it has been known to compound rubber with a flame retarder of the halogen series, flame retarder of the phosphorous series, oxide of antimony, boranic compound, aluminium hydroxide or the like. As the means of obtaining low fuming property, it has also been known to compound rubber with an inorganic filler (clay, calcium carbonate, etc.), aluminium hydroxide, magnesium hydroxide or the like. In the case of the conventional rubber flooring, it is a general practice to use an inorganic filler in a more quantity than usual in order to impart flame-resistance and low fuming property to the rubber flooring.

Flame-resistance and low fuming property of the rubber flooring depends upon the quantity of a compounding agent to be compounded with rubber, but from the viewpoint of maintaining physical properties of rubber itself, there is the least upper bound on the quantity of a compounding agent to be compounded. However, it is difficult to obtain high flame-resistance and low fuming property by the use of a single compounding agent (including an inorganic filler in the case of the conventional rubber flooring). Even the combined use of several different compounding agents does not necessarily improve both flame-resistance and low fuming property.

## SUMMARY OF THE INVENTION

The present invention provides a rubber flooring having both flame-resistance and low fuming property.

In the rubber flooring according to the present invention, the following are compounded with a base rubber at the ratio of 100 weight parts base rubber to

(1)  at least 40 weight parts aluminium hydroxide,

(2)  at least 10 weight parts, as metal quantity of calcium and/or magnesium, of at least one selected from among calcium carbonate, magnesium carbonate, magnesium oxide, calcium hydroxide and magnesium hydroxide,

(3)  at least 3 weight parts of at least one selected from among zinc borate, antimony trioxide and antimony pentoxide. As the base rubber mentioned above, we can use natural rubber, polyisoprene, polybutadiene, styren-butadien copolymer, acrylonitrile-butadien copolymer, ethylene-propylene copolymer, ethylene-propylene-dien terpolymer, etc.

Aluminium hydroxide in the above item (1) not only imparts flame-resistance to rubber flooring but also checks fuming by its action as oxidation-catalyst on soot generated in burning or in smoldering. At least 40 weight parts aluminium hydroxide should be compounded so as to obtain satisfactory effect on fuming restriction but it is more desirable to use more than 60 weight parts.

Calcium carbonate, etc. in item (2) above have action of adsorbing smoke element and adsorbing halogenic gas generated from a flame retarder of the halogen series which is compounded where necessary. These agents should be compounded at least at 10 weight parts as metal quantity to obtain satisfactory effect on fuming restriction but it is more desirable to compound more than 20 weight parts as metal quantitiy.

Zinc borate, etc. in item (3) above have action of accelerating graphitization at the surface and restricting internal combustion when rubber flooring is burning or smoldering and as a result, restrict fuming at burning. These agents should be compounded at least 3 weight parts but it is more desirable to compound them at more than 5 weight parts.

An important point of the present invention is that the compounding agent (1) having oxidation-catalysis, the compounding agent (2) having adsorbing action and the compounding agent (3) having graphitizing action are combined together at a proper ratio so that action and characteristic of each agent do not interfere with each other but are united effectively to produce multiple effect at burning and smoldering.

It can be said commonly to each of the above compounding agents (1), (2), (3) that its use is desirable for flame-resistance and low fuming property but use of it in an excessive quantity results in lowering anti-scratch property, abrasion resistance, softness, etc., which are required as the functions of floor covering material. The least upper bound of the compounding quantity of each of the above compounding agents can be set in consideration of characteristics required for floor covering material and the relation to the compounding quantities of other agents.

In the present invention, in combination with each of the above compounding agents (1), (2), (3) other flame retarders fuming retarders can be used. For example, for the purpose of checking fuming, a low molecular flame retarder of halogen series, such as hexabromobenzene and chlorinated paraffin, and a flame retarder of halogen series, such as polyethylene chloride and polymer halide, can be used at less than 50 weight parts (use or more than 50 weight parts is not desirable as it results in increasing the fuming quantity), preferably at less than 25 weight parts to 100 weight parts of rubber.

Besides, general rubber compounding agents, such as a reinforcing agent, a filler, a softener, resin, a vulcanizing accelerator, a vulcanizing accelerating assistant, a vulcanizing agent, age resister, etc. can be used at your discretion. As carbon black and a softener of the hydrocarbon series reduce low fuming property, these should be used in small quantities or instead, an inorganic reinforcing agent or a softener of the phosphorous series can safely be used.

According to the present invention, it has become possible to improve both flame resistance and low fuming property to a large degree, without impairing functions required for general flooring, such as anti-scratch property. Thus, the present invention ensures walking and a good visual range in case of fire, with resultant safety.

A preferred embodiment:

A decription is made below about a preferred embodiment of the present invention.

The basic compounding for rubber flooring in this embodiment is as shown in Table 1. In addition to this basic compounding, flame retarder and fuming retarders as shown in Table 2 are compounded in Test Examples 1 - 9.

Table 1 (Basic compounding)

| Compounding agent | Weight part |
|---|---|
| SBR 1502 | 60 |
| High styrene rubber 1) | 40 |
| Zinc oxide | 5 |
| Stearic acid | 2 |
| Hard clay | 150 |
| Titanium oxide | 20 |
| Naphtheric oil | 5 |
| Cumarone resin | 5 |

| | |
|---|---|
| Microcrystaline wax | 1 |
| Chlorinated paraffin 2) | 15 |
| Sulphur powder | 5 |
| Colloidal suffur | 5 |
| Accelerator MBTS * | 2.5 |
| Accelerator MBT * | 0.2 |
| Accelerator TMTM * | 0.1 |

1) Japan Synthetic Rubber Co.'s JSR 0061

2) Cl content 70 %

*) MBTS = Dibenzothiazyldisulfide

MBT  = Mercaptobenzothiazole

TMTM = Tetra methylthiurammonosulfide

Table 2

| | | Test Example | | | | | | | | | Comparative Example | | |
|---|---|---|---|---|---|---|---|---|---|---|---|---|---|
| | | 1 | 2 | 3 | 4 | 5 | 6 | 7 | 8 | 9 | 1 | 2 | 3 |
| Compounding Agent (weight part) | | | | | | | | | | | | | |
| | Aluminium hydroxide | 40 | 60 | 80 | 150 | 60 | 60 | 60 | 60 | 60 | 40 | | |
| | Calcium carbonate | 25 | 50 | 80 | 150 | | | | 50 | 50 | | 25 | |
| | Magnesium carbonte | | | | | | 70 | | | | | | |
| | Magnesium oxide | | | | | | | 33 | | | | | |
| | Magnesium hydroxide | | | | | | | | 48 | | | | |
| | Zinc borate | 3 | 5 | 10 | 20 | 5 | 5 | 5 | | | | | 3 |
| | Antimony trioxide | | | | | | | | | 5 | | | |
| | Antimony pentoxide | | | | | | | | | | 5 | | |
| Fuming property Ds | | | | | | | | | | | | | |
| Flaming | after one minute | 21 | 3 | 2 | 1 | 2 | 3 | 4 | 2 | 3 | 189 | 396 | 132 |
| | after four minutes | 108 | 53 | 42 | 28 | 69 | 73 | 77 | 42 | 69 | 308 | 524 | 411 |
| Smoldering | after one minute | 1 | 0 | 0 | 0 | 0 | 0 | 0 | 0 | 0 | 1 | 2 | 5 |
| | after four minutes | 25 | 11 | 8 | 5 | 8 | 12 | 20 | 9 | 15 | 55 | 70 | 84 |
| Flame resistance | | | | | | | | | | | | | |
| | During of burnig (second) | 18 | 3 | 5 | 3 | 3 | 5 | 5 | 0 | 1 | 360 | >600 | 57 |
| | Height of a flame (mm) | 120 | 80 | 80 | 70 | 80 | 90 | 80 | 70 | 70 | 330 | 500 | 250 |

In Table 2, the basic compounding for Comparative Examples 1, 2, 3 is the same as that for the Test Examples. The results of appraising tests of fuming property and flame resistance carried out for the Test Examples and Comparative Examples are shown at the lower columns of Table 2.

In this case, the appraising test of fuming property was carried out in accordance with Standard 258 of NFPA (National Firing Protect Association), namely, test pieces were tested for flaming by using a burner and for smoldering by radiant heat and relative optical densities Ds at the lapse of one minute and at the lapse of four minutes were obtained by the following formula,

$$Ds = \frac{V}{A\,L}\left(\log\frac{100}{T}\right)$$

V : Volume of a test room

A : Area of a test piece

L : Length of optical-path

T : Transmittance

The flame-resistance appraising tests were carried out in accordance with Standard C-542 of ASTM (American Standard Test Method), namely the duration of burning and the height of a flame as at the time when a test piece (12 × 50 × 500mm) was burnt for 15 minutes by using a burner.

In the test results shown in Table 2, the comparison between Test Example 1 and Comparative Examples 1, 2, 3 reveals that the combination of three kinds of agent, namely, an agent having oxidation-catalysis (aluminium hydroxide), an agent having a smoke element adsorbing action (calcium carbonate) and an agent having a surface graphitizing action (zinc borate), has great effects on improving the flame-resistance and low fuming property. In this case, it can generally be said that a low fuming agent (fuming retarding agent) does not necessarily increase its fuming retarding effect simply in proportion to its compounding quantity. Also, its combination with other kinds of agent for sole purposes of restricting fuming dose not produce the desired result. In the combination of the above-mentioned three kinds of agent according to the present invention, it is recognized that the action and characteristic of each agent combined do not interfere with each other but are united effectively to produce a great fume retarding and flaming retarting effect with a comparatively less quantity of each agent.

From the test results of Test Examples 1 - 4, it can be seen that fuming retarding effect and flaming retarding effect increases sharply in proportion to the increase of compounding quantity of each agent, provided up to 60 weight parts for the compounding agent having oxidation-catalysis (aluminium hydroxide), up to 50 weight parts for the compounding agent having adsorbing action (calcium carbonate) or up to 20 weight parts in metal quantity (calcium) and up to 5 weight parts for the compounding agent having surface graphitizing action.

Compounding of each agent in a quantity exceeding the above increases the fuming retarding effect still further but shows only a slight increase in flaming retarding effect. At any rate, it can be said that the compounding of each agent in a more quantity than mentioned above raises the level of both fuming retarding effect and flaming retarding effect.

From the test results of Test Examples 2, 5 - 9, it can be seen that if calcium carbonate, magnesium carbonate, magnesium oxide and magnesium hydroxide are compounded in the same quantity (as metal quantity), no great difference is found in fuming retarding effect among samples and if zinc boride, antimony trioxide and antimony pentoxide are compounded in the same quantity, no great difference is found both in flame-resistance and fuming retarding effect among samples.

As the present invention can be embodied in various types without departing from its substantial characteristics, the above embodiments have been given solely for explanation purposes and are not of restrictive nature. Furthermore, any change in the requirements of the scope of claim for patent and equivalents to such requirements are not included in the scope of claim for patent.

What is claimed is:

## CLAIM

A rubber flooring having the compounds of

a)  100 weigth parts of base rubber,

b)  at least 40 weight parts of aluminium hydroxide,

c)  at least 10 weight parts, as metal quantity of calcium and/or magnesium, of at least one selected from among calcium carbonate, magnesium carbonate, magnesium oxide, calcium hydoroxide and magnesium hydroxide, and

d)  at least 3 weight perts of at least one selected from among zinc borate, antimony trioxide and antimony pentoxide.

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| X | CHEMICAL ABSTRACTS, vol. 93, no. 16, 20th October 1980, page 61, abstract no. 151479j, Columbus, Ohio, US; & JP-B-80 15 229 (SUMITOMO ELECTRIC INDUSTRIES LTD) 22.04.1980 <br> * Abstract * | 1 | C 08 L 21/00 <br> C 08 K 3/22 <br> C 08 K 3/26 <br> C 08 K 3/38 |
| | --- | | |
| X | CHEMICAL ABSTRACTS, vol. 103, no. 26, 30th December 1985, page 67, abstract no. 216703z, Columbus, Ohio, US; F. HAAG: "Low smoke cable materials for offshore applications", & RUBBER OFFSHORE ENG., PROC. CONF. 1983 (Pub. 1984), 244-55 <br> * Abstract * | 1 | |
| | --- | | **TECHNICAL FIELDS SEARCHED (Int Cl 4)** |
| A | US-A-4 131 592 (F.R. DAVIS) <br><br> * Claim 1 * | | C 08 L <br> C 08 K |
| | --- | | |
| P,X | CHEMICAL PATENTS INDEX, BASIC ABSTRACT JOURNAL, week 8644, abstract A0777, 24th December 1986, Derwent Publications, London, GB; & JP-A-86 289 322 (DAINICHI NIPPON CABLES) 22.09.1986 | 1 | |
| | ----- | | |

The present search report has been drawn up for all claims

| Place of search | Date of completion of the search | Examiner |
|---|---|---|
| THE HAGUE | 20-03-1987 | VAN HUMBEECK F.W.C. |